# EUROPEAN PATENT SPECIFICATION

(11) **EP 2 681 301 B1**
(45) Date of publication and mention of the grant of the patent: **10.05.2017**
(21) Application number: 12755189.3
(22) Date of filing: 05.03.2012
(51) Int. Cl.: C12G 1/02

(54) **COMPOSITION OF SATURATED FATTY ACIDS AND ITS USE FOR INHIBITION OF ALCOHOLIC OR MALOLACTIC FERMENTATION AND DOSE REDUCTION OF SULPHUR DIOXIDE IN WINE MAKING TECHNOLOGY**
ZUSAMMENSETZUNG AUS GESÄTTIGTEN FETTSÄUREN UND IHRE VERWENDUNG ZUR HEMMUNG EINER ALKOHOLISCHEN ODER MALOLAKTISCHEN FERMENTIERUNG SOWIE ZUR SCHWEFELDIOXID-DOSISMINDERUNG IN EINER WEINHERSTELLUNGSTECHNOLOGIE
COMPOSITION D'ACIDES GRAS SATURÉS ET SON UTILISATION POUR INHIBER LA FERMENTATION ALCOOLIQUE OU MALOLACTIQUE ET RÉDUIRE LA DOSE DE DIOXYDE DE SOUFRE DANS LES TECHNIQUES D'ÉLABORATION DU VIN

(30) Priority: 04.03.2011 CZ 20110116
(43) Date of publication of application: 08.01.2014
(73) Proprietor: Mendelova Univerzita v Brne, 613 00 Brno (CZ)
(72) Inventor: BARON , Mojmír, 691 44 Lednice (CZ); KUMSTA, Michal, 691 45 Podivín (CZ); BÁBÍKOVÁ, Petra, 697 01 Kyjov (CZ)
(74) Representative: Hartvichova, Katerina
(86) International application number: PCT/CZ2012/000022
(87) International publication number: WO 2012/119572

(56) References cited:
- WO-A1-2009/072097
- CN-A- 1 129 736
- US-A- 3 018 249
- BARON ET AL.: "Saturated higher fatty acids as a means of inhibiting alcoholic fermentation and sulphur dioxide reduction in wine", MITTEILUNGEN KLOSTERNEUBURG, vol. 61, no. 3, April 2011 (2011-04), pages 158-165, XP008157460,
- FELICE ET AL.: "Glic acidi grassi liberi inibitori della fermentatzione malolattica dei vini", INDUSTRIE DELLE BEVANDE, vol. 22, no. 124, 22 April 1993 (1993-04-22), pages 126-130, XP008157455,
- BERGSSON ET AL: "In Vitro Killing of Candida Albicans by Fatty Acids and Monoglycerides", ANTIMICROBIAL AGENTS AND CHEMOTHERAPY, AMERICAN SOCIETY FOR MICROBIOLOGY, WASHINGTON, DC, US, vol. 45, no. 11, 1 November 2001 (2001-11-01), pages 3209-3212, XP003000265, ISSN: 0066-4804, DOI: 10.1128/AAC.45.11.3209-3212.2001
- LAURE ET AL.: "Premières observations sur le mode d'action des écroces de levure", CONNAISSANCE VIGNE VIN, vol. 18, no. 3, 1984, pages 155-163, XP008157467,

## Description

### Backaround of the Invention

The invention herein presented deals with winemaking technology and provides a mixture of saturated fatty acids for inhibition of activity of yeast and milk bacteria during alcoholic and malolactic fermentation and for dose reduction of sulphur dioxide in winemaking technology.

### State of the Art

Alcoholic fermentation is one of the most important winemaking technology processes. Problems that might arise during alcoholic fermentation have economic and qualitative character. Lack of nitrogen is a serious problem. If there is lack of this element in wine, limited yeast growth occurs and alcoholic fermentation slows down. The minimum concentration of assimilated nitrogen for successful fermentation completion is estimated to 140 - 150 mg/l with the ideal concentration of average sugar content must of 190 mg/l. Yeast needs even a small amount of oxygen for its growth. The biggest growth of yeast substance and potential fermentation "to dryness" may occur at its presence. Fermentation might be slow without initial oxygen. This is why wine musts may be oxygenated or aerated to provide support to yeast. High sugar content in must may slow down or even stop alcoholic fermentation as higher sugar content acts as yeast inhibitor: The higher the must sugar content is the more the osmotic pressure to yeast grows. Stress conditions occur at 300 grams of sugar per litre of must and fermentation is impossible at sugar content of 650 grams per litre. Sugar is a source of carbon (energy) for yeast, however adding sugar to fermenting must is not recommended as it might cause a shock to the yeast.

The demand of consumers has been actually bringing the opposite situation in recent years, when yeast needs to be inhibited at the end of fermentation to stop the alcoholic fermentation. The issue of timely termination of alcoholic fermentation to preserve residual sugar in wine is highly complicated. Usual methods applied in practice, like undercooling or filtration lead to excessive costs and are definitely work consuming and moreover unaffordable for small wine makers. Sulphur oxide application itself is not always a hundred per cent reliable and leads to worsened quality of the future product - wine.

Higher fat acids (HFA), like octane caprylic acid, (C₈), decane caprynic acid (C₁₀) and dodecane lauric acid (C₁₂) belong to the group of monocarboxylic unsaturated higher fatty acids occurring naturally for example in walnuts or on mother milk, so these substances are not harmful but they are even beneficial for human health. The property of these acids is that they slow down fermentation. These acids are industrially used in perfumery and paint production.

Some higher fat acids, like hexadecane palmitic (C₁₆) acid and octadecane stearic (C₁₈) acid activate fermentation. On the other hand other higher fatty acids like hexane caprone C₆, octane caprylic C₈ and decane caprynic C₁₀, have fungicidal properties (Lafon-Lafourcade et al. 1984). Oenology laboratory studies were already performed for their inhibition influence on alcoholic fermentation and malolactic fermentation a lot of years ago (De Felice et al. 1993, Ribereau-Gayon et al. 2006). They are naturally formed by yeast itself during alcoholic fermentation and in higher concentration they may contribute to its difficult completion or its course at all. Higher fatty acids added to end-fermentation medium are assimilated by yeast and only a little part is gradually esterified (Viegas et al. 1989). The proportion of fatty acids is in majority eliminated by fixation to the cells of dead yeasts, so their addition has no influence on the final product.

Patent document CN 1129736 discloses a yeast inhibiting composition comprising caprylic acid, capric acid and lauric acid in ratio 1:1:1. This composition, however, shows rather low yeast inhibition properties.

Higher fatty acids are not used for the purpose of yeast activity inhibition during alcoholic fermentation or milk bacteria activity inhibition during malolactic fermentation at present. Published works demonstrate properties of individual higher fatty acids. However they do not offer comparison of their mixtures and development of wines treated this way in relation to sulphur dioxide content and possibilities of secondary fermentation.

### Summary of the invention

The invention is defined in the appended claims.

The aim of the invention hereby presented is to provide a mixture of higher fatty acids C₈, C₁₀ and C₁₂ in the ratio 2:7:1 which would enable easier way of timely termination of alcoholic fermentation or prevention of malolactic fermentation and reduction of sulphur dioxide dosage as conservation agent preventing the secondary fermentation.

The invention also deals with the use of higher fatty acids C₈, C₁₀ and C₁₂ in the ratio 2:7:1 for inhibition of yeast and milk bacteria activity in the phase of end fermentation of grape must and for reduction of sulphur dioxide dosage in wine technology.

The mixture of higher fatty acids C₈, C₁₀ a C₁₂, containing the acids in ratio 2:7:1 has proven ideal in practice.

Mixtures of higher fatty acids C₈, C₁₀ and C₁₂ tend to crystallize if they are solved in solver having more than 50 % vol. of ethanol. Mixtures containing these acids are thus advantageously solved in at least 50 % vol. of ethanol or preferably in 60 % vol. of ethanol. A mixture of higher fatty acids C₈, C₁₀ and C₁₂, dissolved in 70 % vol. of ethanol, while 100 ml of ethanol contains 2 grams of C₈, 7 grams of C₁₀ and 1 gram of C₁₂ has proven very advantageous. This mixture was used in the embodiment examples.

An advantage of the proposed mixture is in high fungicidality of C₈ and C₁₀ acids and the maximum toxicity of C₁₂ acid for milk bacteria. A side purpose of C₈ acid is to increase solubility of hardly soluble C₁₂ acid.

Dosage of such a mixture for fermentation medium is 1:10,000 (1 ml in 10 liters of the fermentation medium). Dosage of such a mixture to wine is 1:20 000.

When dosed to end-fermenting must, non-dissociated fatty acids get into yeast cells, where they dissociate and thus reduce yeast's inner pH and membrane conformation. This leads to rapid inhibition of yeast metabolic activity, its dying and to complete termination of alcoholic fermentation. When dosed to final wines the mixture acts as prevention from milk bacteria, malolactic fermentation and secondary fermentation.

The advantage of the invention herein presented is that dose of other preservatives like sulphur dioxide or ascorbic acid in the storage and bottling phases may be substantially lowered by addition of fatty acids. Reduction of sulphur dioxide application is particularly beneficial. As higher concentration of higher fatty acids occurs in wine after the first tapping when this procedure is applied, the risk of microbial instability is substantially reduced, which results in lower dosage of sulphur dioxide or other preservatives (ascorbic acid, DMDC etc). Minimum influence on wine aroma and flavour, and moreover in positive direction is another positive property. Residues of unbound fatty acids evoke higher aroma and flavour fullness and certain sensual viscosity.

Higher ratio of active free sulphur dioxide against bound SO₂ is another cpntribution of the invention. This balance depends on numerous wine parameters. The higher fatty acid mixture is added approx. 24 hours before first dose of sulphur dioxide. Our research has shown high inhibition of yeast within this interval.

As sulphur dioxide is very strongly bound to the last intermediate product of alcoholic fermentation = acetaldehyde, the first SO₂ dose is to large extent provided by this acetaldehyde accompanied by development of majority proportion of bound SO₂. According to all assumptions this procedure should reduce the quantity of acetaldehyde within the above mentioned 24 hours under influence of protonated form of NADH + H + washed out from cytosol, and thus reduce the future SO₂ binding capacity. Wine treated this way then shows higher concentration of free SO₂ and thus also higher stability with the same dosage of total SO₂ (set by statutory limits).

Low pH, higher ethanol content, lower temperature and higher concentration of free sulphur dioxide are supportive factors of higher fatty acid addition, having synergic influence.

This method can bring effective cost reduction of technologies dealing with wines with residual sugar. Addition of higher fatty acids in combination with lower dose of sulphur dioxide is particularly effective for small winery conditions, where application of expensive operations usual in large winery operations (cooling, sterile filtration) is impossible.

The procedure using the mixture of higher fatty acids reduces laboriousness of wines with residual sugar, and the mixture may be particularly applied to organic wines with regard to appeals for sulphur concentration reduction.

In correct dosage the use of higher fatty acids shows zero impact on organoleptic qualities of wine (see Tab. 2 and 3).

### Brief description of Figures

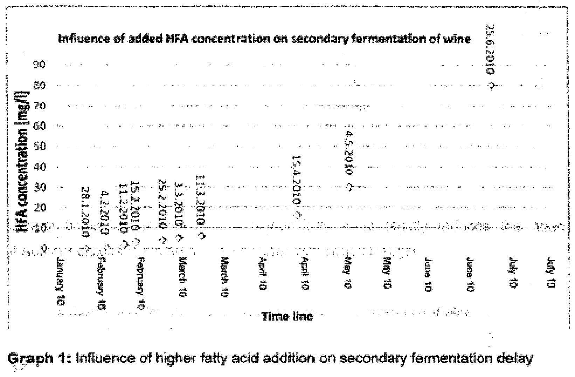

Graph 1 represents the influence of higher fatty acid addition on secondary fermentation delay (Example 2).

### Examples of the invention embodiments

In the following examples a mixture of higher fatty acids C₈, C₁₀ and C₁₂, dissolved in 70 % vol. of ethanol was used, while 100 ml of ethanol contains 2 grams of C₈, 7 grams of C₁₀ and 1 gram of C₁₂.

### Example 1

Ten fermenting grape musts of volumes from 50 to 5000 litres were chosen for comparison of effectiveness of mixtures of higher fatty acids. Application of higher fatty acids was performed at the phase of 10 - 15 g/l of residual sugar. Sulphur dioxide was added to all the variants 24 hours later. Sampling for agar was performed after 7 days. Measurement results are available in Tab. 1 and they confirm more efficient reduction of viable yeast population in the variants of combined use of higher fatty acids and sulphur dioxide.

**Tab. 1: Viable yeast in 1 ml of wine with and without addition of mixture of higher fatty acids together with SO₂ to terminate fermentation at the 10 - 15 g/l residual sugar stage**

| **Wine sample** | **HFA application** | **Volume [I]** | **All SO₂ [mg/l]** | **Free SO₂ [mg/l]** | **Yeast population [1/ml]** |
|---|---|---|---|---|---|
| 1 | YES | 350 | 107.6 | 60.7 | 10² |
| 2 | YES | 350 | 113.9 | 45.6 | 10² |
| 3 | YES | 350 | 91.1 | 51.9 | 10⁰ |
| 4 | YES | 5000 | 184.7 | 65.8 | 10¹ |
| 5 | YES | 5000 | 165.8 | 32.9 | 10² |
| 6 | NO | 50 | 170.8 | 84.8 | > 10⁴ |
| 7 | NO | 50 | 130.3 | 45.6 | > 10⁴ |
| 8 | NO | 150 | 120.2 | 50.6 | 10³ |
| 9 | NO | 100 | 79.7 | 17.7 | > 10⁴ |
| 10 | NO | 100 | 73.4 | 24.0 | 10¹ |

| | | | | | |
|---|---|---|---|---|---|
| Note: SO₂ values are measured by means of iodometry without deduction of ascorbic acid and reducers, populations were counted after propagation in agar. | | | | | |

### Example 2

For determination of the effect of higher fatty acids on secondary fermentation the used wine ('Malverina', pH = 3.22, 18 g/l of residual sugar, 28.4 of free SO₂, 162.8 of all SO₂, unsterilized) was divided to ten variants, two bottles of each. The mixture of higher fatty acids was added to nine bottles in concentration 1, 2, 3, 4, 5, 6, 16, 30 and 80 mg/l, one variant served for control. The bottles were only covered with provisional plastic caps and stored at room temperature for the purpose of supporting the secondary fermentation initiating yeast. A sensory test and carbon dioxide production served for detection of secondary fermentation commencement in a bottle. The secondary fermentation commencement date is an average of the two bottles rounded to whole days. The obtained results (see Graph 1) demonstrate the inhibitory effect of the higher fatty acid mixture on the yeast initiating secondary fermentation. While in the testing sample secondary fermentation started in ten days, the sample with real addition of higher fatty acids of 6 mg/l resisted several times longer. Addition of higher fatty acids rapidly reduces the need of sulphur dioxide in stored or bottled wines with residual sugar.

### Example 3

As elimination of higher fatty acids to yeast cells occurs after the application in the end fermentation phase, there is zero negative incluence on the properties of the future wine. A sensory test with increasing addition of the higher fatty acid mixture was performed to determine the influence on the organoleptic properties of final wines. The same wine ('Malverina', pH = 3.22, 18 g/l of residual sugar, 28.4 of free SO₂, 162.8 of all SO₂, unsterilized) was used as the matrix for all the variants. The tasting panel consisted of seven members with international exams according to the SZPI, *ISO, DIN, ÖNORM* standards. The tasters were first explicitly familiarized with the foreign smell and taste of the higher fatty acid mixture (usually described as soap, paraffin, rancid fat, wet leather or cellulose), then they were tested in proportionally increasing concentration of the mixture in the wine. Tab. 2 shows the results.

**Tab. 2: Sensitivity of the tasters to the increasing addition of the higher fatty acid mixture in the wine.**

| **Dose [mg/l]** | **Sensitivity of the tasters** | | | | | | | **Response [%]** |
|---|---|---|---|---|---|---|---|---|
| **1** | No | No | No | No | No | No | No | **0** |
| **2** | No | No | No | No | No | No | No | **0** |
| **3** | No | No | No | No | No | No | No | **0** |
| **4** | No | No | No | No | No | No | No | **0** |
| **5** | No | No | No | No | No | No | No | **0** |
| **6** | No | No | No | No | No | Yes | Yes | **29** |
| **16** | No | No | Yes | Yes | Yes | Yes | Yes | **71** |
| **30** | Yes | Yes | Yes | Yes | Yes | Yes | Yes | **100** |
| **80** | Yes | Yes | Yes | Yes | Yes | Yes | Yes | **100** |

The same samples were then shuffled and evaluated in random order. Tab. 3 shows the results.

**Tab. 3: Sensitivity of the tasters to random addition of the higher fatty acid mixture in the wine.**

| **Dose [mg/l]** | **Responsibility of the taster** | | | | | | | **Response** [%] |
|---|---|---|---|---|---|---|---|---|
| **1** | No | No | No | No | No | No | No | **0** |
| **2** | No | No | No | No | No | No | No | **0** |
| **3** | No | No | No | No | No | No | No | **0** |
| **4** | No | No | No | No | No | No | No | **0** |
| **5** | No | No | No | No | No | No | No | **0** |
| **6** | No | No | No | No | No | Yes | Yes | **0** |
| **16** | No | No | Yes | Yes | Yes | Yes | Yes | **43** |
| **30** | Yes | Yes | Yes | Yes | Yes | Yes | Yes | **100** |
| **80** | Yes | Yes | Yes | Yes | Yes | Yes | Yes | **100** |

The results show that the addition of higher fatty acid mixture can be reliably recognized in the evaluated samples from the concentration of 30 mg/l. In other words, a concentration lower than 6 mg/l is below the perception threshold of trained individuals and concentration lower than 16 mg/l is recognizable below tip chance probability (75 %).

### Example 4:

An experiment aimed at determination of development of wines treated and untreated by higher fatty acids was performed on the same wine ('Malverina', pH = 3.22, 18 g/l of residual sugar, unsterilized) with doses of 100 and 150 mg/l of SO₂ and combination of the higher fatty acids (10 mg/l each) with 100 mg/l SO₂ (see Tab. 4). Experiment conditions - 10 litres of wine per variant, averages of two measurements, no oxidation protection, store temperature 25°C.

**Tab. 4: Development of free SO₂ in wine with and without addition of C₈, C₁₀ and C₁₂ higher fatty acids.**

| **Dose SO₂** | **100 SO₂** | **C₈ + 100 SO₂** | **C₁₀ + 100 SO₂** | **C₁₂ + 100 SO₂** | **150 SO₂** |
|---|---|---|---|---|---|
| **4/8** | 54.2 | 50.6 | 50.6 | 60.2 | 91.5 |
| **6/8** | 49.4 | 48.2 | 48,2 | 55.4 | 85.5 |
| **9/8** | | | 43.4 | 53.0 | 80.7 |
| **15/8** | 33.7 | 30.1 | 31.3 | 37.3 | 67.5 |
| **17/8** | 32.5 | 32.5 | 33.7 | 39.7 | 63.8 |
| **23/8** | 22.9 | 25.3 | 26.5 | 31.3 | 55.4 |
| **30/8** | 10.8 | 18.1 | 19.3 | 21.7 | 43.4 |
| **4/9** | 3.2 | 10.8 | 10.8 | 13.2 | 22.3 |
| **9/9** | | 6.0 | 6.0 | 10.8 | 12.0 |
| **15/9** | | 1.7 | 1.8 | 2.5 | |

| | | | | | |
|---|---|---|---|---|---|
| Note: A crossed box means secondary fermentation | | | | | |

The results showed nearly the same development of free SO₂ up to the level of approx. 30 mg/l. After that the wines proved more resistant against decrease of free SO₂ in the oxidative conditions of the experiment and secondary fermentation even started later than in wine treated with 150 mg/l of SO₂, which was 150 % of the initial dose compared with the variants with fatty acids.

### Example 5:

For the purpose of higher fatty acids residues, an experiment with the same wine (Chardonnay, pH = 3.18, 10 g/l of residual sugar) was performed, where higher fatty acids were added in the end fermentation phase. One variant served as control (100 mg/l SO₂ only), one variant with higher fatty acids 10 mg/l - mixture of C₈, C₁₀ and C₁₂ (2:7:1) and one variant with application of odd 10 mg/l C₉ fatty acid. The volume of each variant was 350 litres. Then, after the first tapping from yeast sludge the final wines were measured on GC-MS (Gas Chromatography / Mass Spectrometry). Application of C₈, C₁₀ and C₁₂ mixture (2:7:1) does not cause qualitative influence.

### Industrial applicability

Mixture of higher fatty acids may be used by direct application for the purpose of inhibition of the activity of yeast and milk bacteria in the end fermentation phase of grape musts, or by application to wine for protection against secondary fermentation and for reduction of sulphur dioxide dosage during the whole winemaking technology.

## Claims

1. Mixture of higher fatty acids **characterised in that** it consists of the acids C₈, C₁₀ and C₁₂ in the ratio 2:7:1.

2. Mixture of higher fatty acids according to claim 1, wherein it further contains 70 % vol. ethanol in which the acids are dissolved, while 100 ml of ethanol solution contains 2 grams of C₈, 7 grams of C₁₀ and 1 gram of C₁₂.

3. Use of mixture of higher fatty acids according to any one of the preceding claims in winemaking technology.

4. Use of mixture of higher fatty acids according to according to any one of claims 1 to 2 for inhibition of activity of yeast and milk bacteria during alcoholic and malolactic fermentation and for dose reduction of sulphur dioxide in winemaking technology.

5. Use of mixture of higher fatty acids according to claim 3 or 4, wherein the dosage of the mixture prepared this way in fermentation medium is 1:10 000 (1 ml per 10 litres of the media).

6. Use of mixture of higher fatty acids according to claim 3 or 4, wherein the dosage of the mixture prepared this way in fermentation medium is 1:20 000 (1 ml per 20 litres of the media).

## Patentansprüche

1. Zusammensetzung aus höherer Fettsäuren, **dadurch gekennzeichnet, daß** es aus den Säuren C₈, C₁₀ und C₁₂ im Verhältnis 2:7:1 besteht.

2. Zusammensetzung aus höheren Fettsäuren nach Anspruch 1, **dadurch gekennzeichnet, daß** es weiterhin 70% vol Ethanol enthält, in dem die Säuren gelöst sind, und wobei 100 ml Ethanollösung 2 Gramm C₈, 7 Gramm C₁₀ und 1 Gramm C₁₂ enthält.

3. Verwendung von Zusammensetzung aus höheren Fettsäuren nach einem der vorhergehenden Ansprüche in einer Weinherstellungstechnologie.

4. Verwendung einer Zusammensetzung aus höheren Fettsäuren gemäß einem der Ansprüche 1 bis 2 zur Hemmung der Aktivität von Hefe- und Milchbakterien während der alkoholischen und malolaktischen Fermentation und zur Dosisminderung von Schwefeldioxid in einer Weinherstellungstechnologie.

5. Verwendung einer Zusammensetzung aus höheren Fettsäuren nach Anspruch 3 oder 4, wobei die Dosierung der auf diese Weise in Fermentationsmedium hergestellten Mischung 1:10 000 (1 ml pro 10 Liter des Mediums) beträgt.

6. Verwendung einer Zusammensetzung aus höheren Fettsäuren nach Anspruch 3 oder 4, wobei die Dosierung der auf diese Weise in Fermentationsmedium hergestellten Mischung 1:20 000 (1 ml pro 20 Liter des Mediums) beträgt.

## Revendications

1. Mélange d'acides gras supérieurs **caractérisé en ce qu'**il consiste en les acides C₈, C₁₀ et C₁₂ dans le rapport 2:7:1.

2. Mélange d'acides gras supérieurs selon la revendication 1, qui contient en outre 70 % vol. éthanol dans lequel les acides sont dissous, tandis que 100 ml de solution d'éthanol contiennent 2 grammes de C₈, 7 grammes de C₁₀ et 1 gramme de C₁₂.

3. Utilisation d'un mélange d'acides gras supérieurs selon l'une quelconque des revendications précédentes dans les techniques d'élaboration du vin.

4. Utilisation d'un mélange d'acides gras supérieurs selon l'une quelconque des revendications 1 à 2 pour l'inhibition de l'activité des levures et des bactéries laitières lors de la fermentation alcoolique et malolactique et pour la réduction de la dose de dioxyde de soufre dans les techniques d'élaboration du vin.

5. Utilisation d'un mélange d'acides gras supérieurs selon la revendication 3 ou 4, dans laquelle le dosage du mélange préparé de cette manière dans un solution de fermentation est de 1:10 000 (1 ml pour 10 litres du solution).

6. Utilisation d'un mélange d'acides gras supérieurs selon la revendication 3 ou 4, dans lequel le dosage du mélange préparé de cette manière dans un solution de fermentation est de 1:20 000 (1 ml pour 20 litres du solution).
